# EUROPÄISCHE PATENTANMELDUNG

(11) **EP 4 012 917 A1**
(43) Veröffentlichungstag der Anmeldung: **15.06.2022**
(21) Anmeldenummer: 21211272.6
(22) Anmeldetag: 30.11.2021
(51) Int. Cl.: H02P 6/30, H02P 6/22, G01P 13/04, H02H 7/097

(54) **VERFAHREN ZUM BETREIBEN EINES EINSTRÄNGIGEN ELEKTROMOTORS**

(30) Priorität: 14.12.2020 DE 102020215776; 02.11.2021 DE 102021212310
(71) Anmelder: Robert Bosch GmbH, 70442 Stuttgart (DE)
(72) Erfinder: Krauth, Wolfgang, 77855 Achern-Sasbachried (DE); Bergt, Martin, 76137 Karlsruhe (DE)

(57) **Zusammenfassung**

Verfahren zum Betreiben eines einsträngigen Elektromotors (100), aufweisend die Schritte:
- Einstellen einer eingeschwungenen, definierten Drehzahl des Elektromotors (100);
- Definiertes Beaufschlagen einer Wicklung des Elektromotors (100) mit einem elektrischen Prüfpuls (P); und
- Prüfen einer Drehzahl in Reaktion auf den elektrischen Prüfpuls (P), wobei bei einem Verlangsamen ein Rückwärtslauf des einsträngigen Elektromotors (100) erkannt wird und wobei mittels einer Schalteinrichtung (10, 20) die Wicklung des einsträngige Elektromotors (100) mit einem elektrischen Umkehrpuls (UP) zum Umkehren der Drehrichtung des einsträngigen Elektromotors (100) beaufschlagt wird.

## Beschreibung

Die Erfindung betrifft ein Verfahren zum Betreiben eines einsträngigen Elektromotors. Die Erfindung betrifft ferner eine Ansteuervorrichtung zum Betreiben eines einsträngigen Elektromotors. Die Erfindung betrifft ferner ein Computerprogrammprodukt.

### Stand der Technik

Motorkühlgebläse und Pumpen sind Teil eines Thermomanagements, z.B. von Verbrennungsmotoren. Dabei werden das Kühlgebläse die Pumpe durch einen elektronisch kommutierten Motor angetrieben. Die Motortopologie ist üblicherweise derart ausgestaltet, dass z.B. eine elektronische B6-Brückenschaltung zur Ansteuerung verwendet werden kann. Die elektronische B6-Brückenschaltung erzeugt dabei die notwendigen (varianten) elektrischen Spannungspegel an den Motorklemmen mittels pulsweitenmodulierter Ansteuersignale.

In der Regel wird das Motorkühlgebläse mit einer elektrischen Versorgungsspannung von ca. 8V...ca. 16V aus einem elektrischen Niederspannungsnetz ("elektrische Bordspannung") des Fahrzeugs betrieben.

### Offenbarung der Erfindung

Eine Aufgabe der Erfindung ist es daher, ein verbessertes Verfahren zum Betreiben eines einsträngigen Elektromotors bereitzustellen.

Die Aufgabe wird gemäß einem ersten Aspekt gelöst mit einem Verfahren zum Betreiben eines einsträngigen Elektromotors, aufweisend die Schritte:
- Einstellen einer eingeschwungenen, definierten Drehzahl des Elektromotors;
- Definiertes Beaufschlagen einer Wicklung des Elektromotors mit einem elektrischen Prüfpuls; und
- Prüfen einer Drehzahl in Reaktion auf den elektrischen Prüfpuls, wobei bei einem Verlangsamen ein Rückwärtslauf des einsträngigen Elektromotors erkannt wird und wobei mittels einer Schalteinrichtung die Wicklung des einsträngigen Elektromotors mit einem elektrischen Umkehrpuls zum Umkehren der Drehrichtung des einsträngigen Elektromotors beaufschlagt wird.

Auf diese Weise wird aus einem Erkennen einer falschen Drehrichtung ein Umkehrpuls zum Umkehren der Drehrichtung generiert, mit dem die einsträngige Wicklung beaufschlagt wird. Vorzugsweise wird das vorgeschlagene Verfahren einmal einmalig z.B. während eines Hochfahrens des einsträngigen Elektromotors durchgeführt und erlaubt nachfolgend einen konstanten und effizienten Betrieb des einsträngigen Elektromotors, der zum Beispiel zum Antreiben einer Kreiselpumpe im Kraftfahrzeugbereich vorgesehen sein kann.

Gemäß einem zweiten Aspekt wird die Aufgabe gelöst mit einer Ansteuervorrichtung zum Ansteuern eines einsträngigen Elektromotors, aufweisend:
- eine Drehzahlerfassungseinrichtung;
- eine elektronische Schalteinrichtung, die ausgebildet ist, eine Wicklung des einsträngigen Elektromotors mit einem elektrischen Prüfpuls definiert zu beaufschlagen; wobei
- die Drehzahlerfassungseinrichtung ausgebildet ist, in Reaktion auf den elektrischen Prüfpuls eine Drehrichtung des einsträngigen Elektromotors zu prüfen, und wobei
- die Schalteinrichtung ferner ausgebildet ist, bei erkannter falscher Drehrichtung die Wicklung des Elektromotors mit einem elektrischen Umkehrpuls zum Umkehren der Drehrichtung des Elektromotors zu beaufschlagen.

Vorteilhafte Weiterbildungen des Verfahrens sind Gegenstand von abhängigen Ansprüchen.

Eine vorteilhafte Weiterbildung des Verfahrens sieht vor, dass das Beaufschlagen der Wicklung mit dem Prüfpuls bei einem definierten Versatz eines Hallsensorsignale mit einer in der Wicklung induzierten Spannung durchgeführt wird. Vorzugsweise wird für das Erkennen der Drehrichtung die Drehzahl vor und nach dem Beaufschlagen des Prüfpulses miteinander verglichen. Bei einem Vorwärtslauf ergibt sich durch den Prüfpuls kaum eine Änderung der Drehzahl. Bei einem Rückwärtslauf ergibt sich durch den Prüfpuls eine Verlangsamung der Drehzahl.

Vorzugsweise handelt es sich bei dem Hallsensor, der das Hallsensorsignal erfasst, um einen Hallsensor mit Hysterese. Ein Hallsensor mit Hysterese verhindert insbesondere ein Hin- und Herschalten beim Feld-Nulldurchgang. Der Hallsensor mit Hysterese benötigt ein Mindestfeld bevor er die Schaltrichtung ändert, bzw. solch eine Änderung in dem von ihm ausgegeben Hallsensorsignal als Flanke ausgibt. Die Änderung der Schaltrichtung zeigt sich in einer Flanke des Hallsensorsignals.

Eine weitere vorteilhafte Weiterbildung des Verfahrens sieht vor, dass der Prüfpuls bei einer, insbesondere steigenden, Flanke des Hallsensorsignals für eine halbe vorangegangene Periodendauer des Hallsensorsignals aufgeschaltet wird.

Eine weitere vorteilhafte Weiterbildung des Verfahrens sieht vor, dass der Prüfpuls bei einem Überschreiten einer definierten Drehzahl, vorzugsweise bei einem Überschreiten einer Drehzahl in einem Drehzahlbereich von ca. 800 U/min bis ca. 1.200 U/min, vorzugsweise bei Erreichen einer Drehzahl von ca. 1.000 U/min aufgeschaltet wird. Vorteilhaft wird auf diese Weise das Verfahren in einem stabilen oberen Drehzahlbereich des einsträngigen Elektromotors ausgeführt, in welchem aufgrund der Massenträgheit eine gewisse Stabilität vorhanden ist. Falls ein maximaler Volumenstrom angefordert wird, kann der eine Pumpe antreibende Elektromotor diese Leistung auch erbringen. Auf diese Weise ist eine Erfüllung von Spezifikationen unterstützt. Insbesondere führt eine Drehzahl oberhalb eines definierten Grenzwerts zu keiner messbaren Verlangsamung der Drehzahl durch den Prüfpuls.

Eine weitere vorteilhafte Weiterbildung des Verfahrens sieht vor, dass der Prüfpuls nach wenigstens einer ca. 0.5 s andauernden Drehzahl des einsträngigen Elektromotors von ca. 1.000 U/min durchgeführt wird. Vorteilhaft sind in diesem Drehzahlbereich elektrische Ströme noch niedrig, wodurch Schäden minimiert sind. Die falsche Drehrichtung wird somit in einem Bereich korrigiert, in welchem aufgrund der Massenträgheit des Systems ein sicherer nachfolgender Betrieb möglich ist. Dennoch sei erwähnt, dass sämtliche Zahlenwerte lediglich exemplarisch sind und stark von dem verwendeten Motortyp bzw. des mit dem Motor angetriebenen Komponententyps abhängen.

Eine weitere vorteilhafte Weiterbildung des Verfahrens sieht vor, wobei im Falle, dass die induzierte Spannung negativ gegenüber der Spannung des Prüfpulses ein Rückwärtslauf der Maschine detektiert wird, wobei im Falle, dass die induzierte Spannung positiv gegenüber der Spannung des Prüfpulses ist ein Vorwärtslauf der Maschine detektiert wird. Vorteilhaft ist dadurch ein sicheres Erkennen eines Vorwärts- bzw. Rückwärtslaufs des einsträngigen Elektromotors ermöglicht.

Eine weitere vorteilhafte Weiterbildung des Verfahrens sieht vor, dass der Umkehrpuls im Rückwärtslauf des einsträngigen Elektromotors nach einer halben Periodendauer des Hallsensorsignals aufgeschaltet und bei der übernächsten Flanke des Hallsensorsignals abgeschaltet wird. Vorteilhaft ist dadurch unterstützt, dass das vorgeschlagene Verfahren z.B. mittels eines Computerprogrammprodukts auf einfache Weise implementiert werden kann.

Eine vorteilhafte Weiterbildung ist, dass die halbe Periodendauer T/2 des Hallsensorsignals anhand zumindest einer, insbesondere der direkten, vorhergehenden Periode ermittelt wird.

Eine weitere vorteilhafte Weiterbildung des Verfahrens sieht vor, dass das Schalten der Pulse mittels einer elektronischen Schalteinrichtung mit wenigstens zwei Schaltelementen durchgeführt wird. Dadurch ist das vorgeschlagene Verfahren ohne hardwaretechnischen Zusatzaufwand auf einfache Weise und kostengünstig implementierbar.

Die Erfindung wird im Folgenden mit weiteren Vorteilen und Merkmalen anhand von mehreren Figuren detailliert beschrieben. Dabei bilden alle Merkmale, unabhängig von ihrer Darstellung in der Beschreibung bzw. in den Figuren und unabhängig von ihrer Rückbeziehung in den Patentansprüchen den Gegenstand der Erfindung. Die Figuren sind insbesondere zur Verdeutlichung der erfindungsgemäßen Prinzipien gedacht.

Offenbarte Verfahrensmerkmale ergeben sich analog aus entsprechenden offenbarten Vorrichtungsmerkmalen und umgekehrt. Dies bedeutet insbesondere, dass sich Merkmale, technische Vorteile und Ausführungen betreffend das Verfahren in analoger Weise aus entsprechenden Ausführungen, Merkmalen und Vorteilen der Ansteuervorrichtung ergeben und umgekehrt.

In den Figuren zeigt:
- Fig. 1: ein Blockschaltbild eines einsträngigen Elektromotors, der mit dem vorgeschlagenen Verfahren betrieben werden kann;
- Fig. 2: eine prinzipielle Darstellung eines Prüfpulses zur Ermittlung einer Drehrichtung des einsträngigen Elektromotors bei Rückwärtsdrehung;
- Fig. 3: eine prinzipielle Darstellung eines Prüfpulses zur Ermittlung einer Drehrichtung des einsträngigen Elektromotors bei Vorwärtsdrehung;
- Fig. 4: eine prinzipielle Darstellung eines Umkehrpulses zum Umdrehen einer Drehrichtung des einsträngigen Elektromotors;
- Fig. 5: den zeitlichen Signalverlauf von Fig. 4 in einem höheren Auflösungsgrad; und
- Fig. 6: ein prinzipielles Ablaufdiagramm einer vorgeschlagenen Ansteuervorrichtung zum Betreiben eines einsträngigen Elektromotors.

### Beschreibung von Ausführungsformen

Ein Kerngedanke besteht insbesondere darin, eine Drehrichtung eines einsträngigen Elektromotors zu erkennen und bei Erkennen einer falschen Drehrichtung die Drehrichtung umzukehren. Im Ergebnis wird dadurch der Elektromotor mit einer richtigen Drehrichtung angetrieben, wodurch er sein volles Leistungspotential abrufen kann und optimiert betrieben wird. Vorteilhaft können dadurch z.B. eine elektrische Stromaufnahme minimiert und ein Wirkungsgrad bedeutend erhöht sein.

Vorzugsweise ist der Elektromotor Teil einer Pumpe, insbesondere einer Kreiselpumpe. Die Pumpe ist vorzugsweise dafür vorgesehen Flüssigkeiten in einem Kraftfahrzeug zu pumpen.

In der Regel kann ein einsträngiger elektrischer Antrieb im Anlauf und bei kleinen Drehzahlen einem Moment von einer starken Rückwärtsüberströmung nicht gegenhalten, da er über einen Hall-Sensor nur alle 180° elektrisch eine Drehzahl- und Winkelinformation bekommt.

Dadurch kann es nachteiliger Weise vorkommen, dass der einsträngige elektrische Antrieb eine falsche Drehrichtung annimmt, was bei größeren Drehzahlen zu erhöhter elektrischer Stromaufnahme und zu einer geringen hydraulischen Leistung bzw. zu einem schlechten Wirkungsgrad führen kann.

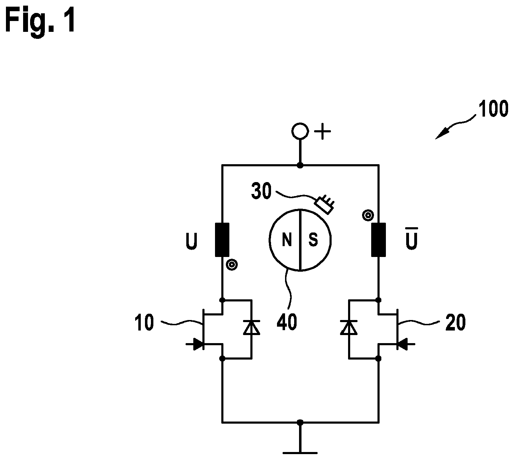

Fig. 1 zeigt stark vereinfacht einen einsträngigen Elektromotor 100, der mit dem vorgeschlagenen Verfahren betrieben werden kann. Man erkennt eine elektronische M2-Schaltung mit zwei elektronischen Schaltelementen 10, 20 in Form von FETs mit jeweils integrierter intrinsischer Gegendiode, die den einsträngigen Elektromotor 100 in Form eines elektronisch kommutierten EC-Motors (z.B. Klauenpolmotor) ansteuern. Eine Wicklung des Elektromotors 100 ist einsträngig ausgebildet und umfasst gegensinnig bestromte Wicklungen bzw. Spulen für elektrische Phasen U, U̅ . Eine Drehzahl des einsträngigen Elektromotors 100 wird mittels seines Läufers 40 und eines Hallsensors 30 erfasst und von einer Steuerungseinrichtung (nicht dargestellt) ausgewertet und gesteuert. Mittels der Steuerungseinrichtung können ferner auch noch Kommunikationsaufgaben ausgeführt werden. Elektrisch ist der Elektromotor 100 z.B. an eine elektrische Bordnetzspannung (z.B. +12V) angeschlossen.

Der Einfachheit halber ist der Läufer 40 zweipolig (Nordpol N, Südpol S) dargestellt, in der Realität sind üblicherweise mehr Pole vorgesehen, was einer entsprechend höheren elektrischen Drehzahl in Relation zu einer definierten mechanischen Drehzahl des einsträngigen Elektromotors 100 entspricht. Der Elektromotor 100 kann beispielsweise zum Antreiben einer Kreiselpumpe vorgesehen sein, die im Kraftfahrzeugbereich zum Bewegen eines Kühlmittels (z.B. Wasser) innerhalb eines Kühlkreislaufs vorgesehen ist, z.B. zum Zwecke einer Aggregatkühlung (z.B. Turboladerkühlung), Innenraumkühlung, usw.

Bei einer "falschen" Drehrichtung erbringt die Kreiselpumpe unter Umständen nur noch eine geringe (z.B. ca. 20%) Förderleistung. In der Praxis mit verzweigten Kühlkreisläufen kann allerdings manchmal der Fall auftreten, dass die Kreiselpumpe im Normalbetrieb des Fahrzeugs von einer Hauptkühlmittelpumpe rückwärtsüberströmt wird, wobei der Volumenstrom der Kreiselpumpe in die "falsche" Richtung geführt wird, wodurch sich im Ergebnis die Kreiselpumpe und der einsträngige Elektromotor 100 rückwärts bzw. "falsch" dreht. Denkbar ist dabei auch, dass die Kreiselpumpe mit dem antreibenden einsträngigen Elektromotor 100 im Anlauf nicht gegen den Volumenstrom der Rücküberströmung ankommt und in nachteiliger Weise falsch, d.h. rückwärts losdreht.

Vorgeschlagen wird eine Prüfung der Drehrichtung unter definierten Bedingungen mit einer ausgeglichenen Drehzahl, wobei zusätzlich berücksichtigt werden sollte, dass der einsträngige Elektromotor 100 z.B. im Kraftfahrzeugbereich unter sehr unterschiedlichen Betriebsbedingungen (zum Beispiel bei großen Temperaturschwankungen, usw.) betrieben werden kann.

Das vorgeschlagene Verfahren prüft zunächst eine Drehrichtung des einsträngigen Elektromotors 100, wobei im Falle, dass eine falsche Drehrichtung erkannt wird, die Drehrichtung des einsträngigen Elektromotors 100 mittels eines Umkehrpulses geändert wird.

Die Prüfung der Drehrichtung des einsträngigen Elektromotors 100 wird vorzugsweise bei einer definierten eingeschwungenen Drehzahl durchgeführt, beispielsweise bei einem Übergang einer definierten Drehzahl in einem Drehzahlbereich von z.B. ca. 800 U/min auf z.B. ca. 1.200 U/min, vorzugsweise bei z.B. ca. 1.000 U/min. Es versteht sich jedoch von selbst, dass diese Zahlenwerte für den Drehzahlbereich lediglich beispielhaft sind und dass andere Elektromotoren die Prüfung der Drehrichtung bei einer anderen Drehzahl vornehmen.

Vorgeschlagen wird, bei einem Überschreiten der Drehzahl von ca. 1.000 U/min die Drehzahl eine definierte Dauer (z.B. 0.5 Sekunden) auf ca. 1000 U/min zu belassen. Weicht die Drehzahl durch eine Überströmung nach oben ab, wird gewartet, bis sie auf 1.000 U/min fällt.

Nach Erreichen der definierten Drehzahl von ca. 1.000 U/min wird ein Prüfpuls P mit den Schaltelementen 10, 20 elektronisch aufgeschaltet, der nur im Rückwärtslauf des einsträngigen Elektromotors 100 bremsend wirkt. Dieser Prüfpuls P beginnt bei einer definierten Flanke eines Hallsensorsignals und endet nach der halben Periodendauer T1/2 des Hallsensorsignals HS.

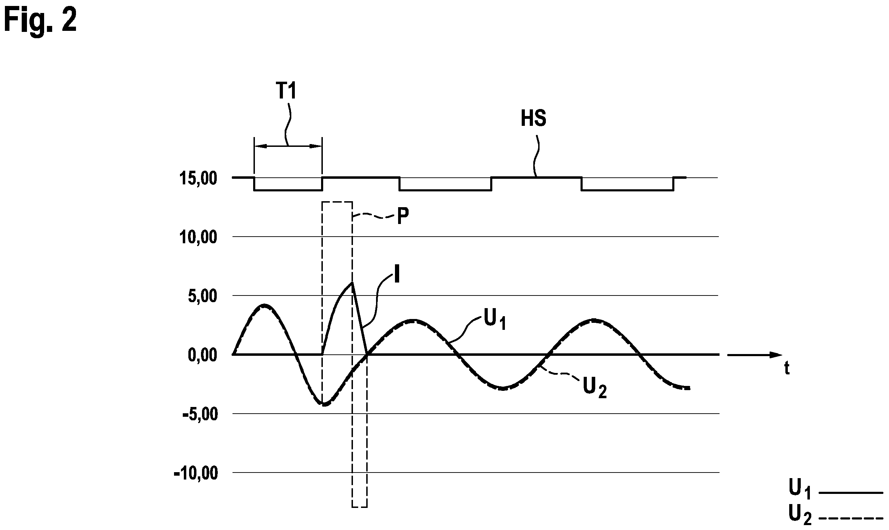

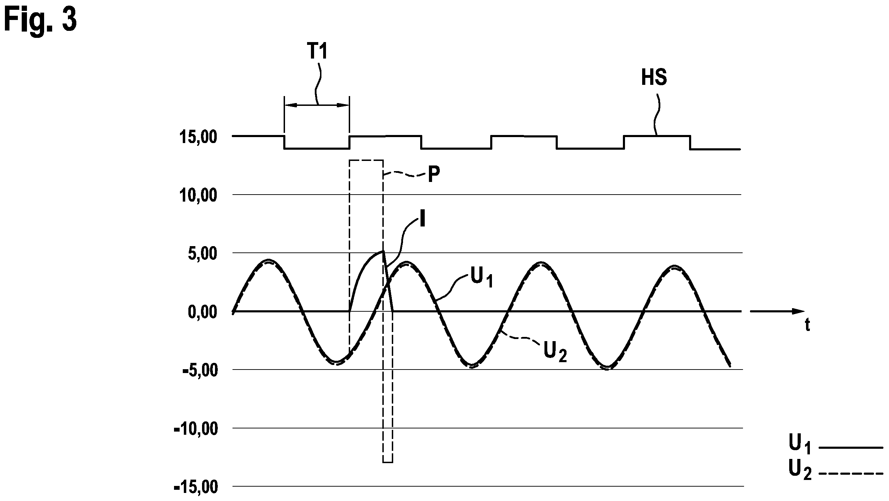

Die induzierte Spannung und das Hallsensorsignal HS korrelieren miteinander. Bei einem Rückwärtslauf ergibt sich eine induzierte Spannung U1 und ein korrespondierendes Hallsignal HS entsprechend Figur 2. Bei einem Vorwärtslauf ergibt sich eine induzierte Spannung U1 und ein korrespondierendes Hallsignal HS entsprechend Figur 3.

Der Prüfpuls wird in Figur 2 und 3 beispielshaft bei einer steigenden Flanke des Hallsensorsignals HS aufgeschaltet. Gemäß einer Weiterbildung der Erfindung kann er auch bei einer fallenden Flanke aufgeschaltet werden.

Fig. 2 zeigt ein Zeitdiagramm von elektrischen Signalen des einsträngigen Elektromotors 100. Man erkennt eine in der einsträngigen Wicklung induzierte elektrische induzierte Spannung U1 (durchgezogen) und eine an eine der Spulen (je nach Lage des Hallsensorsignals HS) angelegte elektrische Spannung U2 (strichliert) an. Eine Differenz aus U1 und U2 wirkt als eine stromtreibende elektrische Spannung, die den Strom I durch die Wicklung treibt, eine entsprechende Stromspitze ist in Fig. 2 gut erkennbar. Eine zeitliche Ausbildung eines Prüfpulses P wird aus dem Hallsensorsignal HS, insbesondere der Hallsensorlage zum Stator, abgeleitet, welches grundsätzlich phasenversetzt zu einem Nullspannungs-Durchgang ist und eine Hysterese von etwa +-10° elektrisch beinhaltet und im Rückwärtslauf einen wesentlich größeren Winkelversatz aufweisen kann. Ein durch die einsträngige Wicklung fließender elektrischer Strom I steigt während des positiven Verlaufs des Prüfpulses P an und fällt in einem negativen Verlauf des Prüfpulses P ab.

Eine Drehrichtungsinformation des Elektromotors 100 kann ausschließlich aus dem Hallsensorsignal HS nicht entnommen werden. Der Prüfpuls P hat bei vorwärtsdrehendem Elektromotor 100 eine Winkellage, bei der sich Bremsen und Beschleunigen nahezu neutralisieren. U1 repräsentiert die induzierte Spannung in der einsträngigen Wicklung, die in etwa auch dem Drehmoment entspricht. Die Zeitdauer T1 zwischen der Abwärts- und Aufwärtsflanke des Hallsensorsignals HS entspricht dabei 180° elektrisch (entsprechend einer halben elektrischen Umdrehung des Läufers 40). Man erkennt, dass der Prüfpuls P bei einer steigenden Flanke des Hallsensorsignals (Periodendauer T1) beginnt und nach einer halben Periodendauer T/2 des Hallsensorsignals HS endet. Die Halbe Periodendauer wird insbesondere anhand der Pulslänge vor dem aufschalten des Prüfpulses berechnet. Der Prüfpuls P wird somit in der positiven Phase des Hallsensorsignals rechteckförmig an das erste Schaltelement 10 angelegt. Der negative Verlauf des Prüfpulses P wird dabei von der intrinsischen Diode des anderen Schaltelements 20 übernommen. Es ergibt sich ein in der Figur 2 gezeigte Verlangsamung der Drehzahl.

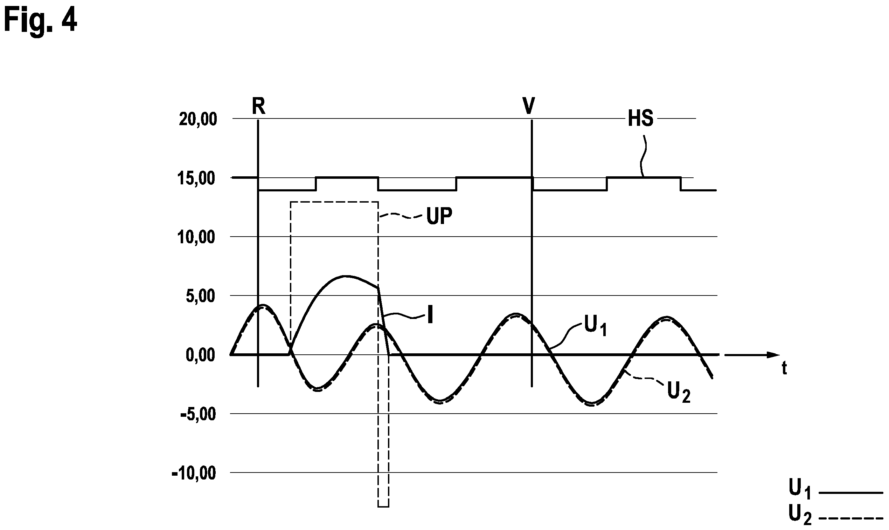

Man erkennt in Fig. 2, dass nach Anlegen des Prüfpulses P die Frequenz der induzierten Spannung U1 sinkt, wodurch sich die Drehzahl des einsträngigen Elektromotors 100 verringert und eine "falsche" Drehrichtung, insbesondere ein Rückwärtslauf, erkannt wird. Die verringerte Drehzahl ist an der vergrößerten Periodendauer des Hallsensorsignal HS nach dem Aufschalten des Prüfpulses P erkennbar. In weiterer Folge ist mit dem vorgeschlagenen Verfahren somit eine Umkehr der Drehrichtung des einsträngigen Elektromotors 100 vorgesehen, wie weiter unten mit Bezugnahme auf Fig. 4 näher erläutert wird.

Der Versatz zwischen einer Flanke des Hallsensorsignals HS und dem Nulldurchgang der induzierter Spannung U1 im Rückwärtslauf beträgt bedingt durch die Hysterese und den mechanischen Versatz elektrische 90 bis 120 Grad, vorzugsweise zirka elektrische 110 Grad. Wobei der Versatz von der mechanischen Ausrichtung des Halssensors zu Stator ist. Denkbar ist somit auch ein Versatz von 100 Grad. Der in Figur 2 gezeigte Versatz von zirka 110 Grad stellt daher eine beispielhafte Ausführung dar.

Fig. 3 zeigt ein Szenario, in dem sich nach Anlegen des Prüfpulses P die Drehzahl des einsträngigen Elektromotors 100 im Wesentlichen nicht ändert (erkennbar an der im Wesentlichen gleichbleibenden Frequenz des Hallsensorsignals HS nach Aufschalten des Prüfpulses P) und ein Normalbetrieb des einsträngigen Elektromotors 100 somit fortgesetzt werden kann. Beispielsweise kann in diesem Fall ein Drehzahlregler (nicht dargestellt) die weitere Steuerung des einsträngigen Elektromotors 100 übernehmen und den einsträngigen Elektromotor 100 zum Erreichen der geforderten Solldrehzahl geeignet ansteuern.

Der Versatz zwischen einer Flanke des Hallsensorsignals HS und dem Nulldurchgang der induzierter Spannung U1 im Vorwärtslauf beträgt bedingt durch die Hysterese und den mechanischen Versatz elektrische 40 bis 70 Grad, vorzugsweise zirka elektrische 50 Grad. Wobei der Versatz von der mechanischen Ausrichtung des Halssensors zu dem Stator ist. Der in Figur 2 gezeigte Versatz von 50 Grad stellt daher eine beispielhafte Ausführung dar.

Unter Versatz wird insbesondere der Winkelversatz verstanden.

Insbesondere ist der Versatz, insbesondere der Winkelversatz, beim Rückwärtslauf größer als beim Vorwärtslauf.

Fig. 4 zeigt ein Szenario einer Drehrichtungsumkehr, das von einer falsch erkannten Drehrichtung, also eines Rückwärtslaufs, des einsträngigen Elektromotors 100 gemäß Fig. 2 ausgeht. In diesem Fall wird die einsträngige Wicklung über die Schaltelemente 10, 20 mit einem elektrischen Umkehrpuls UP beaufschlagt. Man erkennt im Hallsensorsignal HS eine Winkellage R rückwärts, bei der sich der einsträngige Elektromotor 100 rückwärts (falsch) dreht und eine Winkellage V, bei der sich der einsträngige Elektromotor 100 nach Beaufschlagung mit dem Umkehrpuls UP vorwärts (richtig) dreht. In diesen etwa 180° elektrisch bzw. 45° mechanisch ändert der Läufer 40 des einsträngigen Elektromotors 100 seine Drehrichtung von ca. 1.000 U/min "rückwärts" auf ca. 800 U/min "vorwärts".

Erkennbar ist, dass der Umkehrpuls UP nach einer, insbesondere fallenden, Flanke des Hallsensorsignals HS in der Winkellage rückwärts mittels des ersten Schaltelements 10 aufgeschaltet wird, über eine nachfolgende, insbesondere steigende, Flanke des Hallsensorsignals HS hinaus andauert und erst bei der nächstfolgenden, insbesondere fallenden, Flanke des Hallsensorsignals HS wieder zurückgenommen wird. Eine entsprechende Beaufschlagung ist beispielhaft in Figur 4 dargestellt.

Gemäß einer Weiterbildung der Erfindung kann der Umkehrpuls UP nach einer, insbesondere steigenden, Flanke des Hallsensorsignals HS in der Winkellage rückwärts mittels des ersten Schaltelements 10 aufgeschaltet wird, über eine nachfolgende, insbesondere fallenden, Flanke des Hallsensorsignals HS hinaus andauert und erst bei der nächstfolgenden, insbesondere steigenden, Flanke des Hallsensorsignals HS wieder zurückgenommen wird. Entsprechend muss auch die Stromrichtung des Umkehrpulses angepasst werden (nicht dargestellt).

Vorzugsweise wird der Umkehrpuls UP im Rückwärtslauf des einsträngigen Elektromotors 100 kurz vor dem Nulldurchgang der induzierten Spannung U1 aufgeschaltet und bei der übernächsten Flanke des Hallsensorsignals HS abgeschaltet wird.

Ähnlich wie beim Prüfpuls P wird auch beim Umkehrpuls UP der negative Anteil von der intrinsischen Gegendiode des anderen Schaltelements 20 übernommen.

Der Umkehrpuls wird bei T/2, also der halben Periodendauer, des Hallsensorsignals aufgeschaltet. Vorzugsweise kann er auch im Bereich 40% bis 60% eines Hallsensorsignalpulses geschaltet werden.

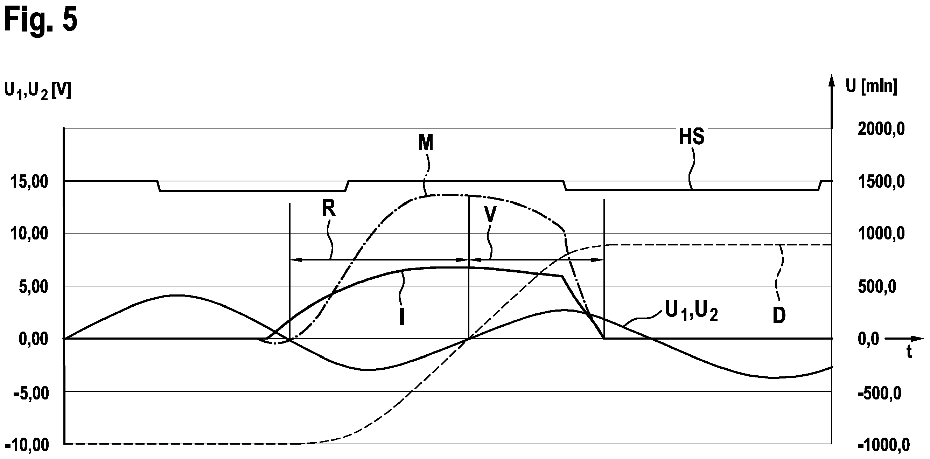

Das entspricht einem Winkelversatz zwischen Hallsensorsignal HS und Nulldurchgang der induzierten Spannung U1 von wenigen Grad, insbesondere 10 bis 30 Grad, vorzugsweise 15 bis 25 Grad. Der Versatz ist abhängig von der mechanischen Hallsensorlage zum Stator. Der genaue Wert ist insbesondere abhängig von der Hallsensorlage zum Stator. Beispielhaft ist bei dem hier gezeigten 8 poligen Elektromotor der Hallsensor um 50 Grad elektrisch gegenüber dem Stator verschoben. Siehe hierzu auch Figur 5.

Die in Figur 4 gezeigte Winkellage V vorwärts liegt beispielsweise bei ungefähr 50 Grad vor dem Nulldurchgang. Grund hierfür ist, dass ein bestimmtes Feld benötigt wird, bevor der Hallsensor umschaltet.

Die Winkellage R rückwärts liegt beispielhaft bei 110 Grad vor dem Nulldurchgang der induzierten Spannung. Die Winkellagen 50 Grad plus 110 Grad plus 20 Grad durch Hysterese ergeben 180 Grad.

Gemäß einer Weiterbildung der Erfindung liegt die Winkellage V vorwärts bei ungefähr 60 Grad vor dem Nulldurchgang. Grund hierfür ist, dass ein bestimmtes Feld benötigt wird, bevor der Hallsensor umgeschaltet.

Die Winkellage R rückwärts liegt beispielhaft bei 100 Grad vor dem Nulldurchgang der induzierten Spannung. Die Winkellagen 60 Grad plus 100 Grad plus 20 Grad durch Hysterese ergeben 180 Grad.

Der Umkehrpuls wird an der zweiten Flanke beendet. Der Umkehrpuls wird beispielhaft in Figur 4 an der nächsten fallenden Flanke des Hallsensorsignals HS beendet.

Danach übernimmt der Drehzahlregler und der einsträngige Elektromotor 100 läuft mit der richtigen Drehrichtung z.B. auf seine Solldrehzahl hoch.

Im Ergebnis wird auf die erläuterte Art und Weise im stabilen oberen Drehzahlbereich des einsträngigen Elektromotors 100 die Drehrichtung und somit die Leistung und Effizienz auch bei Rücküberströmung sichergestellt.

Fig. 5 zeigt den Verlauf von Fig. 4 in einem höheren zeitlichen Auflösungsgrad, wobei Fig. 5 auch noch einen Drehzahlverlauf D zeigt, bei dem die Umkehr der Drehrichtung des einsträngigen Elektromotors 100 erkennbar ist. Ferner ist ein Verlauf eines Drehmoments M (z.B. in Ncm) erkennbar, das in einem Rückwärtslauf R mit Bremsen und einem Vorwärtslauf V mit Beschleunigen des einsträngigen Elektromotors 100 auftritt.

Der Nulldurchgang der Kurve D zeigt den Punkt an dem die Drehrichtung umgekehrt wird. Weiterhin zeigt Figur 5, dass der Umkehrpuls UP vor, insbesondere kurz vor, dem Nulldurchgang der induzierten Spannung U1 angelegt wird. Der Umkehrpuls UP wird in Abhängigkeit von der halben Periodenbreite des Hallsensorsignals HS angelegt, was dazu führt, dass der Umkehrpuls kurz vor dem Nulldurchgang anliegt. Dies führt dazu, dass das sich ergebende Moment noch einen kurzen Winkel zu einem minimalen Drehmoment in die falsche Richtung führt, bevor sich das Moment umdreht und zu einer Verlangsamung führt. Anschließend erfolgt eine Drehung in Vorwärtsrichtung.

Gemäß einer Weiterbildung der Erfindung kann dies im Vorwärtslauf auch bei 50 Grad und im Rückwärtslauf bei 110 Grad sein. Dies ist Abhängig von der Position der des Hallsensors zu dem Stator und umgekehrt. Vorzugsweise ist der Winkelversatz im Vorwärtslauf kleiner als im Rückwärtslauf.

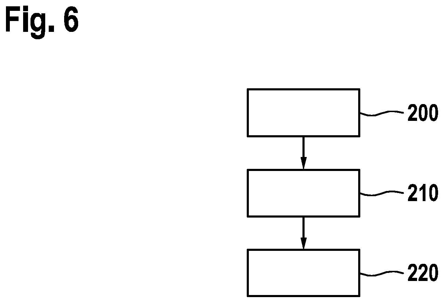

Fig. 6 zeigt einen prinzipiellen Ablauf eines vorgeschlagenen Verfahrens:

In einem Schritt 200 erfolgt ein Einstellen einer eingeschwungenen, definierten Drehzahl des Elektromotors 100.

In einem Schritt 210 erfolgt ein definiertes Beaufschlagen einer Wicklung des Elektromotors 100 mit einem elektrischen Prüfpuls P.

Schließlich erfolgt in einem Schritt 220 ein Prüfen einer Drehzahl in Reaktion auf den elektrischen Prüfpuls P, wobei bei einem Verlangsamen ein Rückwärtslauf des einsträngigen Elektromotors 100 erkannt wird. Wird ein verlangsamen erkannt so wird mittels einer Schalteinrichtung 10, 20 die Wicklung des einsträngigen Elektromotors 100 mit einem elektrischen Umkehrpuls UP zum Umkehren der Drehrichtung des einsträngigen Elektromotors 100 beaufschlagt.

Vorteilhaft kann das vorgeschlagen Verfahren wenigstens teilweise in Software auf einem elektronischen Steuerrechner implementiert werden, wodurch eine einfache Adaptierbarkeit des vorgeschlagenen Verfahrens unterstützt ist.

Obwohl die Erfindung vorgehend anhand von konkreten Ausführungsbeispielen beschrieben worden ist, ist sie keineswegs darauf beschränkt. Ein Fachmann wird die beschriebenen Merkmale somit abändern oder kombinieren können, ohne vom Kern der Erfindung abzuweichen.

## Patentansprüche

1. Verfahren zum Betreiben eines einsträngigen Elektromotors (100), aufweisend die Schritte:
- Einstellen einer eingeschwungenen, definierten Drehzahl des Elektromotors (100);
- Definiertes Beaufschlagen einer Wicklung des Elektromotors (100) mit einem elektrischen Prüfpuls (P); und
- Prüfen einer Drehzahl in Reaktion auf den elektrischen Prüfpuls (P), wobei bei einem Verlangsamen ein Rückwärtslauf des einsträngigen Elektromotors (100) erkannt wird und wobei mittels einer Schalteinrichtung (10, 20) die Wicklung des einsträngige Elektromotors (100) mit einem elektrischen Umkehrpuls (UP) zum Umkehren der Drehrichtung des einsträngigen Elektromotors (100) beaufschlagt wird.

2. Verfahren nach Anspruch 1, wobei das Beaufschlagen der Wicklung mit dem Prüfpuls (P) bei einem definierten Versatz eines Hallsensorsignals (HS) mit einer in der Wicklung induzierten Spannung (U1) durchgeführt wird, wobei für das Erkennen der Drehrichtung die Drehzahl vor und nach dem Beaufschlagen des Prüfpulses miteinander verglichen wird.

3. Verfahren nach Anspruch 1 oder 2, wobei der Prüfpuls (P) bei einer, insbesondere steigenden, Flanke des Hallsensorsignals (HS) für eine halbe vorangegangene Periodendauer (T1/2) des Hallsensorsignals (HS) aufgeschaltet wird.

4. Verfahren nach Anspruch 3, wobei der Prüfpuls (P) bei einem Überschreiten einer definierten Drehzahl, vorzugsweise bei einem Überschreiten einer Drehzahl in einem Drehzahlbereich von ca. 800 U/min bis ca. 1.200 U/min, vorzugsweise bei Erreichen einer Drehzahl von ca. 1.000 U/min aufgeschaltet wird.

5. Verfahren nach einem der vorhergehenden Ansprüche, wobei der Prüfpuls (P) nach wenigstens einer ca. 0.5s andauernden Drehzahl des einsträngigen Elektromotors (100) von ca. 1.000 U/min durchgeführt wird.

6. Verfahren nach einem der vorhergehenden Ansprüche, wobei im Falle, dass die induzierte Spannung (U1) negativ gegenüber der Spannung des Prüfpulses (P) ein Rückwärtslauf der Maschine detektiert wird und wobei im Falle, dass die induzierte Spannung positiv gegenüber der Spannung des Prüfpulses (P) ist, ein Vorwärtslauf des einsträngigen Elektromotors (100) detektiert wird.

7. Verfahren nach einem der vorhergehenden Ansprüche, wobei der Umkehrpuls (UP) im Rückwärtslauf des einsträngigen Elektromotors (100) im Bereich von 40% bis 60%, vorzugsweise nach einer halben, Periodendauer des Hallsensorsignals (HS) aufgeschaltet und bei der übernächsten Flanke des Hallsensorsignals (HS) abgeschaltet wird.

8. Verfahren nach einem der vorhergehenden Ansprüche, wobei das Schalten der Pulse (P, UP) mittels einer elektronischen Schalteinrichtung mit wenigstens zwei Schaltelementen (10, 20) durchgeführt wird.

9. Ansteuervorrichtung zum Betreiben eines einsträngigen Elektromotors (100) aufweisend:
- eine Drehzahlerfassungseinrichtung (30, 40);
- eine elektronische Schalteinrichtung (10, 20), die ausgebildet ist, eine Wicklung des einsträngigen Elektromotors (100) mit einem elektrischen Prüfpuls (P) definiert zu beaufschlagen; wobei
- die Drehzahlerfassungseinrichtung (30, 40) ausgebildet ist, in Reaktion auf den elektrischen Prüfpuls (P) eine Drehrichtung des einsträngigne Elektromotors (100) zu prüfen, und wobei
- die Schalteinrichtung (10, 20) ferner ausgebildet ist, bei erkannter falscher Drehrichtung die Wicklung des Elektromotors mit einem elektrischen Umkehrpuls (UP) zum Umkehren der Drehrichtung des Elektromotors (100) zu beaufschlagen.

10. Computerprogrammprodukt, mit Programmcodemitteln zur Durchführung des Verfahrens nach einem der Ansprüche 1 bis 9, wenn es auf einer Ansteuervorrichtung zum Betreiben eines einsträngigen Elektromotors (100) ausgeführt oder auf einem computerlesbaren Datenträger gespeichert ist.
